# EUROPEAN PATENT APPLICATION

(11) **EP 4 660 927 A1**
(43) Date of publication of application: **10.12.2025**
(21) Application number: 23919824.5
(22) Date of filing: 31.08.2023
(51) Int. Cl.: G06Q 50/04, G06Q 50/12

(54) **FOOD HYGIENE MANAGEMENT DEVICE, FOOD HYGIENE MANAGEMENT SYSTEM, FOOD HYGIENE MANAGEMENT METHOD, AND PROGRAM**

(30) Priority: 03.02.2023 JP 2023015505
(71) Applicant: Panasonic Intellectual Property Management Co., Ltd., Kadoma-shi, Osaka 571-0057 (JP)
(72) Inventor: WADA, Yusuke, Kadoma-shi, Osaka 571-0057 (JP); HARUMOTO, Hideaki, Kadoma-shi, Osaka 571-0057 (JP)
(74) Representative: Eisenführ Speiser
(86) International application number: PCT/JP2023/031895
(87) International publication number: WO 2024/161688

(57) **Abstract**

Provided are a food hygiene management device, a food hygiene management system, a food hygiene management method, and a program whereby labor and time spent on food hygiene management can be reduced and hygiene management can be performed more hygienically. This food hygiene management device comprises: a core temperature acquisition unit that acquires core temperature information indicating the core temperature of a food item; a picture acquisition unit that acquires picture data of the food item; a reading unit that reads a food information image including an acceptable range with respect to the core temperature of the food item, and recognizes the acceptable range; and a screen generation unit that generates a composite picture display screen displaying composite picture data including the core temperature information, information about the date/time at which the core temperature was measured, the acceptable range, and the picture data for the food item.

## Description

### Technical Field

The present disclosure relates to a food hygiene management device, a food hygiene management system, a food hygiene management method, and a program.

### Background Art

Food hygiene management based on HACCP (Hazard Analysis and Critical Control Point) is being implemented. In the food hygiene management process based on HACCP, it is necessary to record the core temperature, which is the internal temperature of the cooked food, as well as the condition of the food such as packaging and labeling.

For hygiene management based on HACCP, digitalization has been promoted. For example, PTL 1 discloses a management system in which staff use a smartphone, tablet device, or the like to input check results for each item in a predefined checklist.

### Citation List

### Patent Literature

PTL 1
Japanese Patent Application Laid-Open No. 2021-174184

### Summary of Invention

### Technical Problem

In food factories and other facilities where food is cooked and produced, it is necessary to manage the hygiene of a large quantity of food. In the technology disclosed in PTL 1, staff members are required to input check results for multiple items for a large number of food products. Therefore, although the effort and time required for each individual input may be small, the overall hygiene management process requires significant effort and time.

From the viewpoint of hygiene management, there is a demand for a method that allows staff to input check results without having to touch the hygiene management device, such as a tablet terminal.

An object of the present disclosure is to provide a food hygiene management device, a food hygiene management system, a food hygiene management method, and a program that can reduce the labor and time in food hygiene management, and enable more hygienic management.

### Solution to Problem

A food hygiene management device according to the present disclosure includes: a core temperature acquirer that acquires core temperature information representing a core temperature of a food; a photograph acquirer that acquires photograph data on the food; a reader that reads a food information image including an acceptable range for the core temperature of the food to recognize the acceptable range; and a screen generator that generates a composite photograph display screen on which composite photograph data including the core temperature information, date/time information on a measurement date/time of the core temperature, the acceptable range and the photograph data of the food is displayed.

A food hygiene management system according to the present disclosure includes: a core temperature information generation device that generates core temperature information representing a core temperature of a food; a photograph capturing device that captures a photograph of the food; and the above-described food hygiene management device.

A food hygiene management method according to the present disclosure includes: acquiring core temperature information representing a core temperature of a food; acquiring photograph data on the food; reading a food information image including an acceptable range for the core temperature of the food to recognize the acceptable range; and generating a composite photograph display screen on which composite photograph data including the core temperature information, date/time information on a measurement date/time of the core temperature, the acceptable range and the photograph data of the food is displayed.

A program according to the present disclosure causes a computer to execute the above-described food hygiene management method.

### Advantageous Effects of Invention

According to the present disclosure, it is possible to reduce the labor and time in food hygiene management, and enable more hygienic management.

### Brief Description of Drawings

FIG. 1 is a schematic view illustrating an example of a configuration of a food hygiene management system according to Embodiment 1;
FIG. 2 is a block diagram illustrating an example of a hardware configuration of the food hygiene management device of FIG. 1;
FIG. 3 is a functional block diagram illustrating an example of a configuration of the food hygiene management device of FIG. 1;
FIG. 4 is a schematic view illustrating an example of a standby image display screen displayed on the display device of FIG. 1;
FIG. 5 is a schematic view illustrating an example of a standby image display screen displayed on the display device of FIG. 1;
FIG. 6 is a schematic view illustrating an example of a composite photograph display screen displayed on the display device of FIG. 1;
FIG. 7 is a sequence diagram illustrating an example of a flow of a food hygiene management process using the food hygiene management system according to Embodiment 1;
FIG. 8 is a sequence diagram illustrating an example of a flow of the food hygiene management process using the food hygiene management system according to Embodiment 1;
FIG. 9 is a flowchart illustrating an example of a flow of the food hygiene management process using the food hygiene management system according to Embodiment 1;
FIG. 10 is a flowchart illustrating another example of a flow of the food hygiene management process using the food hygiene management system according to Embodiment 1;
FIG. 11 is a flowchart illustrating a variation of a flow of the food hygiene management process using the food hygiene management system according to Embodiment 1;
FIG. 12 is a schematic view illustrating an example of a code image;
FIG. 13 is a schematic view illustrating an example of a food information change screen displayed on a display device according to Embodiment 2; and
FIG. 14 is a flowchart illustrating an example of a flow of the food hygiene management process using a food hygiene management system according to Embodiment 2.

### Description of Embodiments

Hereinafter, embodiments of the present disclosure will be described with reference to the drawings. The present disclosure is not limited to the embodiments described below and may be modified in various ways without departing from the spirit and scope of the present disclosure. Further, the present disclosure includes all possible combinations of the constituent elements described in the embodiments below that can be combined. In the drawings, elements denoted by the same reference numerals represent the same or equivalent components, which applies throughout the entire specification.

### Embodiment 1

Hereinafter, Embodiment 1 of the present disclosure is described. The food hygiene management system according to Embodiment 1 is a system for managing the hygiene state of food in a food manufacturing factory where food is produced, for example.

### Configuration of Food Hygiene Management System 100

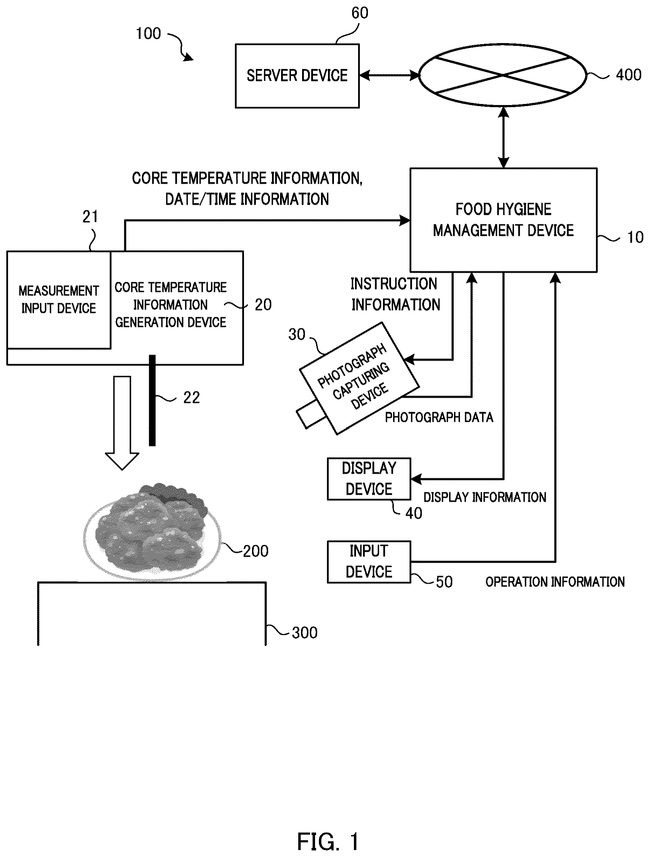

FIG. 1 is a schematic view illustrating an example of a configuration of food hygiene management system 100 according to Embodiment 1. Food hygiene management system 100 performs a food hygiene management process on food 200 to be managed in the state where food 200 is placed on platform 300. Food 200 is, for example, heated food or food that has been refrigerated or frozen. Cooked food 200 is transported to platform 300, for example, by an operator employed at the food manufacturing factory.

As illustrated in FIG. 1, food hygiene management system 100 includes food hygiene management device 10, core temperature information generation device 20, photograph capturing device 30, display device 40, input device 50, and server device 60. In addition, in food hygiene management system 100, food hygiene management device 10 and server device 60 are connected to each other through network 400 such as the Internet, intranet or the like.

Food hygiene management device 10 performs general control and the like of each component included in food hygiene management system 100. In Embodiment 1, food hygiene management device 10 executes a food hygiene management process to manage the hygiene state of food 200. Details and the like of the food hygiene management process will be described later.

Core temperature information generation device 20 measures the core temperature of food 200. Core temperature information generation device 20 is a mobile core thermometer, for example. A core temperature means a temperature at the center of food 200. Core temperature information generation device 20 includes measurement input device 21 and needle 22.

Measurement input device 21 receives an operation of starting core temperature measurement. Measurement input device 21 may be a switch, for example. Needle 22 is a needle to be inserted into food 200. A sensor for measuring the core temperature of food 200 is provided at the tip of needle 22.

The operator inserts needle 22 into food 200 such that the tip of needle 22 of core temperature information generation device 20 is located inside the food, and in that state, measurement input device 21 is operated. In this manner, core temperature information generation device 20 can measure the core temperature of food 200.

Core temperature information generation device 20 transmits core temperature information representing the measured core temperature to food hygiene management device 10 through radio communication or wired communication. In addition, core temperature information generation device 20 transmits date/time information representing the measurement date/time of the core temperature of food 200 to food hygiene management device 10 together with the core temperature information.

Photograph capturing device 30 is a camera that captures a still image or a moving image, for example. On the basis of instruction information received from food hygiene management device 10, photograph capturing device 30 captures food 200, and generates photograph data. The instruction information is information for instructing the operation of photograph capturing device 30 from food hygiene management device 10 to photograph capturing device 30.

Note that, as described later, the instruction information in this case is transmitted from food hygiene management device 10 to photograph capturing device 30 on condition that food hygiene management device 10 has received the core temperature information and date/time information sent from core temperature information generation device 20. Specifically, in response to acquisition of the core temperature information and date/time information at food hygiene management device 10 from core temperature information generation device 20, photograph capturing device 30 generates photograph data.

In addition, photograph capturing device 30 generates a standby image, which is an image captured while waiting to capture food 200 (hereinafter referred to as "during standby for imaging" as necessary). The instruction information in this case is transmitted from food hygiene management device 10 to photograph capturing device 30 on condition that the food hygiene management process has been started.

Photograph capturing device 30 transmits the generated photograph data and standby image to food hygiene management device 10 through radio communication or wired communication.

Display device 40 performs a display based on the display information generated by food hygiene management device 10. The display information is information for displaying a predetermined screen generated by food hygiene management device 10 on display device 40. Display device 40 is a display device such as a liquid crystal display, or an organic electro luminescence (EL) display, for example.

Input device 50 receives an inputting operation on food hygiene management device 10, and transmits to food hygiene management device 10 operation information representing the operation content. Input device 50 is, for example, an operation input device such as a keyboard, mouse, trackball, or touch panel. When input device 50 is a touch panel, input device 50 and display device 40 may be arranged in a superimposed manner.

Server device 60 receives various data related to food 200 from food hygiene management device 10 through network 400, and stores the received data.

Hereinabove, the general configuration of food hygiene management system 100 has been described. Note that, in the example illustrated in FIG. 1, food hygiene management device 10, core temperature information generation device 20, photograph capturing device 30, display device 40, and input device 50 are described as they are independently of each other. However, this is not limitative, and at least some of the plurality of components included in the food hygiene management system of the present disclosure may be combined.

For example, display device 40 and input device 50 may be superimposed to form a touch panel. In addition, for example, photograph capturing device 30, display device 40, and input device 50 may be configured as a single computer (such as a personal computer (PC), a tablet terminal, and a smartphone). Further, for example, a computer including photograph capturing device 30, display device 40, and input device 50 may serve a function of food hygiene management device 10. In this case, core temperature information generation device 20 may be included in a part of the computer.

Specifically, a single tablet terminal may include photograph capturing device 30, display device 40 such as a liquid crystal display, input device 50 such as a touch panel, and a computer that serves a function of food hygiene management device 10, for example.

### Hardware Configuration of Food Hygiene Management Device 10

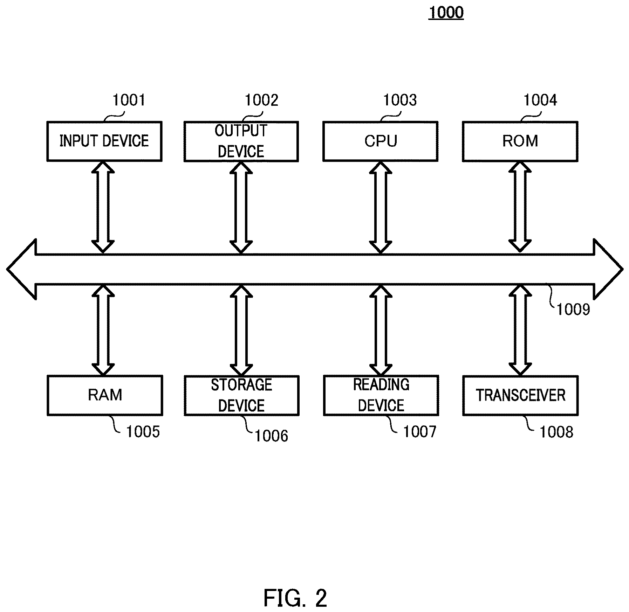

A computer as an example of the hardware configuration of food hygiene management device 10 is described below. FIG. 2 is a block diagram illustrating an example of a hardware configuration of food hygiene management device 10 of FIG. 1. As illustrated in FIG. 2, computer 1000 as an example of the hardware configuration of food hygiene management device 10 includes input device 1001 such as a keyboard, mouse, or touch pad, output device 1002 such as a display or speaker, central processing unit (CPU) 1003, read only memory (ROM) 1004, random access memory (RAM) 1005, storage device 1006 such as a hard disk device or solid state drive (SSD), reading device 1007 that reads information from a recording medium such as a digital versatile disk-ROM (DVD-ROM) or a universal serial bus (USB) memory, and transceiver 1008 that performs communication through a network. Each unit of computer 1000 is connected through bus 1009.

Then, from a recording medium storing a program for implementing the function of the above-mentioned each device, reading device 1007 reads the program, and stores it in storage device 1006. Alternatively, transceiver 1008 communicates with the system device connected to the network, and stores, in storage device 1006, the above-described program for implementing the function of each device downloaded from the system device.

Then, CPU 1003 copies the program stored in storage device 1006 in RAM 1005, and sequentially reads and executes the order included in the program RAM 1005, thus implementing each function of food hygiene management device 10.

### Configuration of Food Hygiene Management Device 10

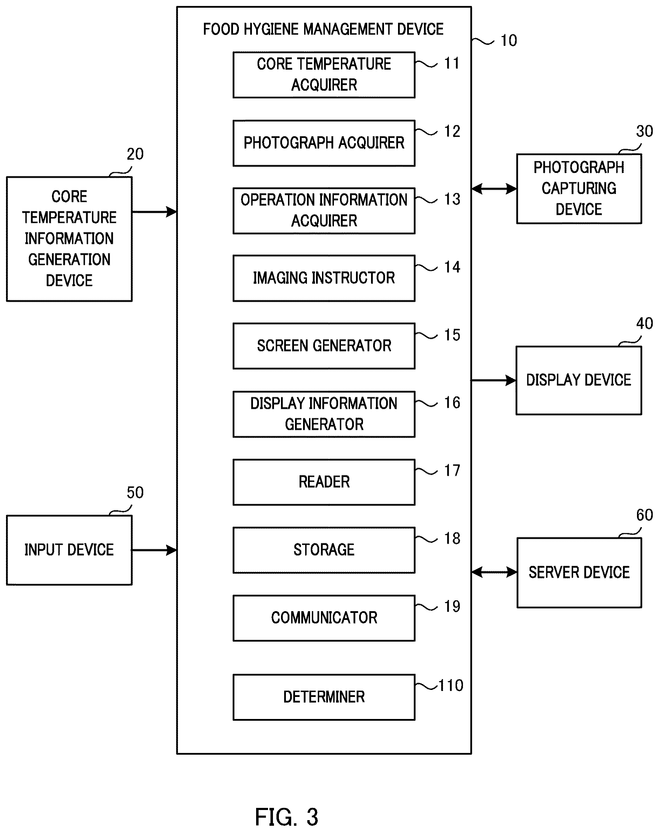

FIG. 3 is a functional block diagram illustrating an example of a configuration of food hygiene management device 10 of FIG. 1. As illustrated in FIG. 3, food hygiene management device 10 includes core temperature acquirer 11, photograph acquirer 12, operation information acquirer 13, imaging instructor 14, screen generator 15, display information generator 16, reader 17, storage 18, communicator 19, and determiner 110.

Core temperature acquirer 11 acquires core temperature information and date/time information from core temperature information generation device 20. Core temperature acquirer 11 supplies the acquired core temperature information and date/time information to screen generator 15.

Photograph acquirer 12 acquires photograph data from photograph capturing device 30. Photograph acquirer 12 supplies the acquired photograph data to screen generator 15.

Operation information acquirer 13 acquires operation information from input device 50.

Imaging instructor 14 generates instruction information for instructing the operation of photograph capturing device 30. When the food hygiene management process is started, imaging instructor 14 transmits instruction information for acquiring a standby image to photograph capturing device 30, for example. In addition, in response to reception of core temperature information and date/time information at core temperature acquirer 11, imaging instructor 14 transmits instruction information for capturing food 200 to photograph capturing device 30, for example.

Screen generator 15 generates various screens to be displayed on display device 40. For example, screen generator 15 generates a standby image display screen, which is a screen during standby for imaging. In addition, for example, screen generator 15 generates composite photograph data in which the type, core temperature, measurement date/time and acceptable range for the core temperature of food 200 are synthesized onto photograph data acquired by photograph acquirer 12. Then, screen generator 15 generates a composite photograph display screen for displaying the generated composite photograph data. Note that, details of the standby image display screen and composite photograph display screen will be described later.

Display information generator 16 generates display information for displaying the screen generated by screen generator 15 on display device 40.

Reader 17 reads the food information image captured in the standby image obtained during standby for imaging, and recognizes food information on the basis of the read food information image. The food information is information related to food 200 to be captured, and represents an acceptable range for the type of food 200 or the core temperature of food 200, for example.

The food information image is an image including food information, and provided within the imaging range of photograph capturing device 30, that is, the top surface of platform 300. The food information image is, for example, a character image in which information related to food 200 is expressed in text, a code image such as a two-dimensional code like a QR (Quick Response) code (registered trademark), or a one-dimensional code such as a barcode.

Storage 18 stores various information used for food hygiene management device 10. For example, storage 18 stores an acceptable range initial value for a capturing target in advance. The acceptable range initial value is an initial value of an acceptable range, which is a standard range for determining whether the core temperature of food 200 is an appropriate temperature.

In addition, for example, storage 18 stores composite photograph data generated by screen generator 15. At this time, storage 18 stores the composite photograph data in a table format in which date/time information and composite photograph data are associated with each other, for example. In addition, storage 18 stores the composite photograph data in a binary data format. As storage 18, a storage medium such as a hard disk drive (HDD), a solid state drive (SSD) or the like is used, for example.

Note that, in this example, the composite photograph data and acceptable range initial value are stored in storage 18, but the present invention is not limited to this, and the composite photograph data and acceptable range initial value may be stored in server device 60, for example. In this case, the composite photograph data is transmitted to server device 60 through communicator 19 and network 400. Then, food hygiene management device 10 stores, in storage 18, a uniform resource locator (URL) representing the address of the composite photograph data stored in server device 60, instead of the binary data.

In addition, in this example, food hygiene management device 10 includes storage 18 serving as a storage device, but the present invention is not limited to this, and food hygiene management device 10 may not include storage 18, for example. In this case, food hygiene management device 10 may transmit the composite photograph data to server device 60 through network 400, and cause the server device 60 to store the composite photograph data.

Communicator 19 is connected to network 400 through radio communication or wired communication, and controls the communication with server device 60. For example, communicator 19 transmits composite photograph data generated by screen generator 15 to server device 60 through network 400.

Determiner 110 determines whether the core temperature of food 200 is within the acceptable range on the basis of the core temperature information acquired by core temperature acquirer 11 and the acceptable range read by reader 17. Then, determiner 110 notifies screen generator 15 of the determination result regarding whether the core temperature is within the acceptable range.

### Display at Display Device 40

A display at display device 40 is described below. In Embodiment 1, the standby image display screen or composite photograph display screen is displayed on display device 40 in response to the operation of food hygiene management system 100. The standby image display screen is a screen that is displayed on display device 40 during a standby state until photograph data is generated by photograph capturing device 30 after the food hygiene management process is started. The composite photograph display screen is a screen that displays the composite photograph data generated by photograph capturing device 30.

### Standby Image Display Screen 1400

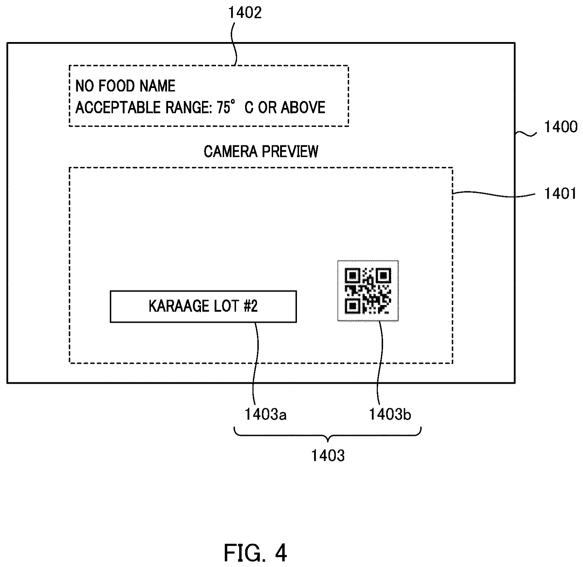

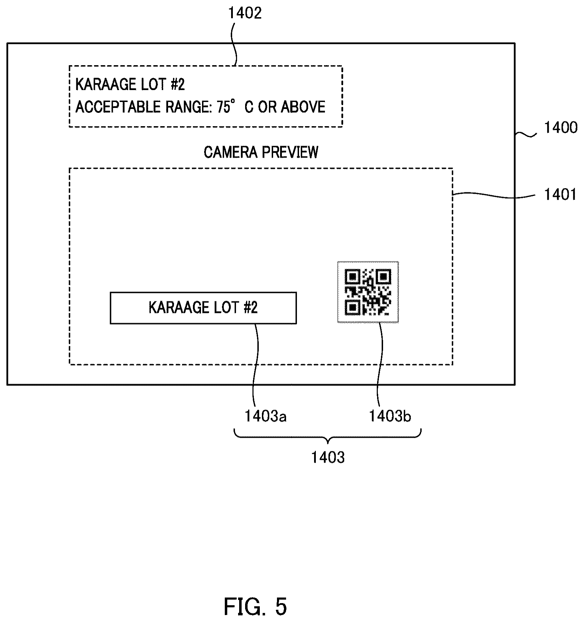

FIGS. 4 and 5 are schematic views illustrating an example of standby image display screen 1400 displayed on display device 40 of FIG. 1. Standby image display screen 1400 is a screen that displays the standby image generated by photograph capturing device 30, and information related to food 200 to be captured during standby for imaging. As illustrated in FIGS. 4 and 5, standby image display screen 1400 includes captured image display region 1401, and food information display region 1402.

Captured image display region 1401 is a region for displaying the standby image acquired by photograph capturing device 30 during standby for imaging. Food information display region 1402 is a region for displaying food information that is recognized when food information image 1403 captured in the standby image is read. Food information image 1403 is an image representing information related to food 200, and, for example, at least one of letter image 1403a and code image 1403b.

Letter image 1403a represents information related to food 200 in the form of letters. In Embodiment 1, letter image 1403a mainly represents information about the type of food 200. More specifically, letter image 1403a represents the name or type of food 200 in the form of letters such as "Karaage (Japanese-style deep-fried food)" as the type of food 200.

Note that, letter image 1403a is not limited to this, and may represent the acceptable range of the core temperature of food 200 in the form of letters. For example, letter image 1403a represents the acceptable range in a predetermined format. In this manner, when letter image 1403a is read by reader 17, food hygiene management device 10 can recognize that the read letters represent the acceptable range for the core temperature.

Code image 1403b represents information related to food 200 in the form of a code. In Embodiment 1, code image 1403b mainly represents information about the acceptable range for the core temperature of food 200. Specifically, for example, code image 1403b is a coded representation of information representing the acceptable range, using a predetermined format such as JavaScript Object Notation (JSON).

For example, consider a case where code image 1403b encodes information written in a JavaScript Object Notation (JSON) format as shown below. In this case, the value of ""temp-low"" represents the minimum temperature of the acceptable range, and the value of ""temp-high"" represents the maximum temperature of the acceptable range. In addition, ""comment"" represents a string used for composition.

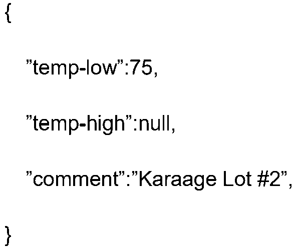

Accordingly, this example represents that the acceptable range is "75°C or above", and that the type of food 200 is "Karaage Lot #2". Note that, the value "null" of ""temp-high"" represents that there is no set value.

In the state where food information image 1403 is not read, or cannot be recognized, the type and acceptable range of food 200 based on a preliminarily set acceptable range initial value is displayed as an initial value of the food information in food information display region 1402 as illustrated in FIG. 4. Specifically, for example, in food information display region 1402, "no food name" is displayed as an initial value of the type of food 200, and "acceptable range:75°C or above" is displayed as the acceptable range initial value.

When food information image 1403 is normally read, food information on recognized food 200 is displayed in the form of letters in food information display region 1402 as illustrated in FIG. 5. For example, in food information display region 1402, the type and acceptable range of food 200 are displayed. In the example illustrated in FIG. 5, "Karaage Lot #2" is displayed as the type of food 200, and "acceptable range:75°C or above" is displayed as the acceptable range of food 200.

### Composite Photograph Display Screen 1410

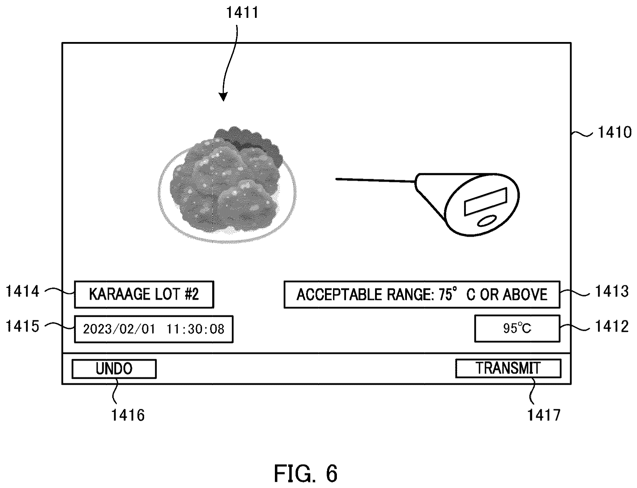

FIG. 6 is a schematic view illustrating an example of composite photograph display screen 1410 displayed on display device 40 of FIG. 1. As illustrated in FIG. 6, composite photograph display screen 1410 includes food image 1411, core temperature image 1412, acceptable range image 1413, food type image 1414, measurement date/time image 1415, recapturing reception image 1416, and transmission reception image 1417.

Food image 1411 is an image generated by capturing food 200 with photograph capturing device 30. Core temperature image 1412 is an image generated based on core temperature information and representing the core temperature of food 200 in the form of letters.

Acceptable range image 1413 is an image representing the acceptable range of the core temperature of food 200 in the form of letters. Food type image 1414 is an image representing the type of captured food 200 in the form of letters. Measurement date/time image 1415 is an image generated based on date/time information and representing the measurement date/time in the form of letters.

The composite photograph data displayed as composite photograph display screen 1410 is generated by screen generator 15 synthesizing core temperature image 1412, acceptable range image 1413, food type image 1414 and measurement date/time image 1415 onto the photograph data including food image 1411, for example.

Recapturing reception image 1416 is an image to be selected through input device 50 when the operator who has viewed composite photograph display screen 1410 displayed on display device 40 determines that recapturing should be performed.

For example, when the photograph of food 200 is not clear due to a blur in the photograph or the like and the operator who has viewed composite photograph display screen 1410 determines that recapturing should be performed, recapturing reception image 1416 is selected through input device 50. In this case, the composite image data before the recapturing may be discarded, or stored in storage 18.

Transmission reception image 1417 is an image to be selected through input device 50 when the operator who has viewed composite photograph display screen 1410 displayed on display device 40 determines that it is not necessary to recapture food 200, and that the acceptable range of the core temperature of food 200 displayed on image 1413 is within the acceptable range. When the operator views composite photograph display screen 1410 and determines that the core temperature shown in core temperature image 1412 is not within the acceptable range, food 200 does not meet the required hygiene standards, and accordingly the operator determines that the food needs to be recooked.

Specific examples are described below. For example, when food 200 is karaage and the acceptable range of the core temperature for karaage is 75°C or above, and the core temperature shown in core temperature image 1412 is 72°C, the operator determines that food 200 should be recooked. Alternatively, when food 200 is frozen tuna and the acceptable range for frozen tuna is - 20°C or below, and the core temperature shown in core temperature image 1412 is -18°C, the operator determines that food 200 should be recooked or reprocessed. When the operator determines that the food should be recooked or reprocessed, the operator performs an operation to select recapturing reception image 1416 through input device 50.

Then, when the operator determines that food 200 should be recooked, the operator returns that food 200 to the cooking step, and performs cooking again. Alternatively, the operator may request another worker to recook food 200.

In addition, when the operator determines that it is not necessary to recapture food 200, and that the core temperature of food 200 is within the acceptable range, the operator performs an operation of selecting transmission reception image 1417 through input device 50. In response to this, input device 50 generates operation information representing that transmission reception image 1417 has been selected, and transmits it to food hygiene management device 10.

### Operation of Food Hygiene Management System 100

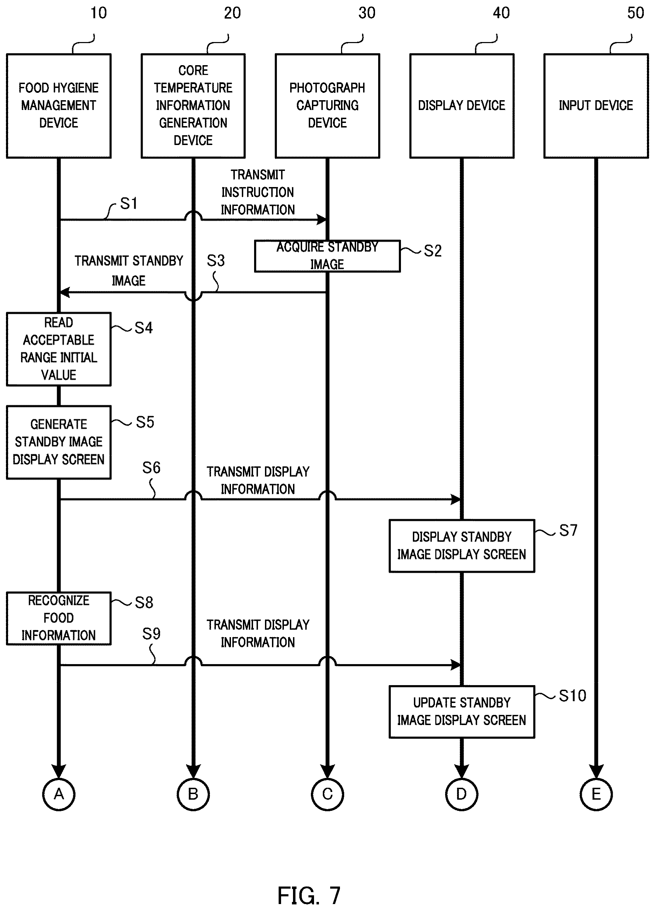

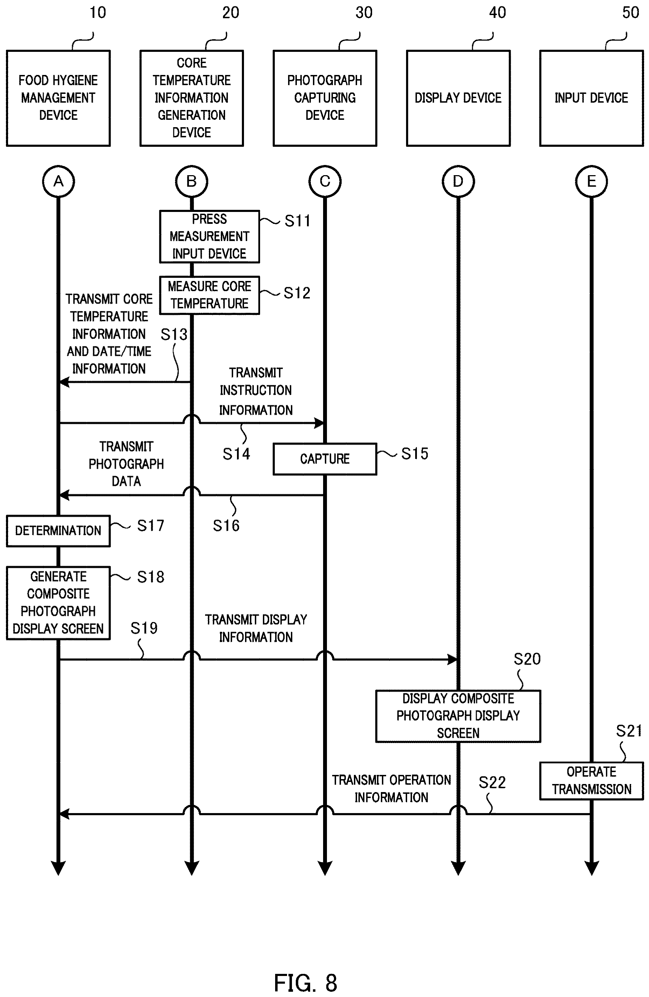

Next, an operation of food hygiene management system 100 according to Embodiment 1 is described below. FIGS. 7 and 8 are sequence diagrams illustrating an example of a flow of the food hygiene management process using food hygiene management system 100 according to Embodiment 1. Note that, in FIGS. 7 and 8, marks A to E represent transitions of the processes to respective marks.

First, when the food hygiene management process is started, at step S1, food hygiene management device 10 transmits, to photograph capturing device 30, instruction information for acquiring a standby image of a region including platform 300 on which food 200 to be captured is placed.

At step S2, photograph capturing device 30 acquires the standby image on the basis of the received instruction information. At step S3, photograph capturing device 30 transmits, to food hygiene management device 10, the acquired standby image.

At step S4, food hygiene management device 10 reads the acceptable range initial value stored in storage 18. At step S5, food hygiene management device 10 generates standby image display screen 1400 (see FIG. 4) including the read acceptable range initial value and the standby image received from photograph capturing device 30.

At step S6, food hygiene management device 10 transmits, to display device 40, display information for displaying standby image display screen 1400. At step S7, on the basis of the display information received from food hygiene management device 10, display device 40 displays standby image display screen 1400. Note that, the processes from step S1 to step S3 are periodically repeated until the process of step S7 is completed.

In addition, the order of the process of acquiring the standby image described for step S1 to step S3 and the process of acquiring acceptable range initial value described for step S4 at food hygiene management device 10 is not limited to this example. For example, the process of step S4 may be performed prior to the processes of step S1 to step S3, or simultaneously with the processes of step S1 to step S3.

Further, when display device 40 displays standby image display screen 1400, display device 40 may indicate a display facilitating the reading of food information on standby image display screen 1400 in a superimposed manner, for example. Specifically, for example, standby image display screen 1400 may display a message "read food information" or the like.

At step S8, when food information image 1403 including information related to food 200 is shown in the standby image displayed in standby image display screen 1400, food hygiene management device 10 reads the food information image 1403. Then, food hygiene management device 10 recognizes food information from the read food information image 1403. At step S9, food hygiene management device 10 transmits, to display device 40, display information for adding the recognized food information to standby image display screen 1400.

At step S10, on the basis of the display information received from food hygiene management device 10, display device 40 displays the food information in food information display region 1402 of standby image display screen 1400, and updates standby image display screen 1400. At this time, display device 40 may display the information such that a display for facilitating the measurement of the core temperature of food 200 is displayed on standby image display screen 1400 in a superimposed manner, for example. More specifically, standby image display screen 1400 may display a message "measure core temperature" or the like.

On the other hand, at step S11, in the state where needle 22 is inserted in food 200 (see FIG. 1) placed on platform 300, the operator presses measurement input device 21 of core temperature information generation device 20. At step S12, core temperature information generation device 20 measures the core temperature of food 200, and generates core temperature information and date/time information representing the measurement date/time.

At step S13, core temperature information generation device 20 transmits the generated core temperature information and date/time information to food hygiene management device 10. At step S14, food hygiene management device 10 that has received the core temperature information and date/time information transmits instruction information for capturing the photograph of food 200 to photograph capturing device 30.

At step S15, on the basis of the received instruction information, photograph capturing device 30 captures food 200, and generates photograph data. At step S16, photograph capturing device 30 transmits the generated photograph data to food hygiene management device 10. At step S17, on the basis of the acceptable range and core temperature information, food hygiene management device 10 determines whether the core temperature represented by the core temperature information is within the acceptable range.

At step S18, food hygiene management device 10 that has received the photograph data generates composite photograph data on the basis of the core temperature information, date/time information and photograph data. Then, on the basis of the generated composite photograph data, food hygiene management device 10 generates composite photograph display screen 1410 (see FIG. 6).

Here, when food hygiene management device 10 determines that the core temperature is within the acceptable range at step S17, food hygiene management device 10 may add an indication that the core temperature satisfies a standard in addition to the core temperature information and date/time information in composite photograph display screen 1410. In addition, when it is determined that the core temperature is not within the acceptable range, food hygiene management device 10 may add an indication that the core temperature does not satisfy the standard in addition to the core temperature information and date/time information in composite photograph display screen 1410.

In this manner, when composite photograph display screen 1410 additionally including the indication that the core temperature of food 200 does not satisfy the standard is transmitted to and displayed on display device 40, the operator can recognize that the core temperature of the food does not satisfy the standard at a glance.

At step S19, food hygiene management device 10 transmits, to display device 40, display information for displaying generated composite photograph display screen 1410. At step S20, on the basis of the display information received from food hygiene management device 10, display device 40 displays composite photograph display screen 1410.

At step S21, input device 50 receives an operation of transmitting composite photograph data performed by the operator who has viewed composite photograph display screen 1410, and generates operation information of transmitting the composite photograph data to server device 60 on the basis of the operation of the operator. At step S22, input device 50 transmits the generated operation information to food hygiene management device 10.

Food hygiene management device 10 that has received the operation information for transmitting composite photograph data transmits the composite photograph data to server device 60. Server device 60 stores the received composite photograph data. In this manner, the food hygiene management process for one food 200 is completed.

Thereafter, the operator sends food 200 for which the food hygiene management process has been completed to the next step, such as a packaging step and/or a shipment step, and then puts new food 200 on platform 300 (see FIG. 1). Then the process is returned to step S1.

Note that, in the sequence diagram of FIG. 8, when the operator who has viewed the composite photograph data in composite photograph display screen 1410 displayed on display device 40 at step S20 determines that capturing should be performed again and operates recapturing reception image 1416 (see FIG. 6), input device 50 generates operation information representing that recapturing reception image 1416 has been operated, and transmits it to food hygiene management device 10.

In response to this, food hygiene management device 10 again transmits instruction information that instructs capturing to photograph capturing device 30 so as to cause photograph capturing device 30 to perform recapturing. Then, on the basis of the recaptured photograph data, food hygiene management device 10 generates new composite photograph data, and generates composite photograph display screen 1410 based on the new composite photograph data. New composite photograph display screen 1410 is transmitted to and displayed on display device 40. This process is repeated until the operator operates transmission reception image 1417.

In the examples illustrated in FIGS. 7 and 8, core temperature information generation device 20 generates the core temperature information together with the date/time information on the measurement date/time of the core temperature and transmits it to food hygiene management device 10, but the present disclosure is not limited to this. For example, core temperature information generation device 20 may not generate the date/time information, and food hygiene management device 10 that has received the core temperature information from core temperature information generation device 20 may generate the date/time information on the basis of the received time. In addition, the date/time information may be generated as necessary by a component other than core temperature information generation device 20 and food hygiene management device 10, that is, photograph capturing device 30, display device 40, or input device 50.

In addition, the pass/fail determination for the core temperature performed at step S17 may be performed by server device 60, for example. In this case, food hygiene management device 10 transmits, to server device 60, the acceptable range included in the food information recognized at step S8 and the core temperature information received at step S13. Server device 60 determines whether the core temperature represented by the core temperature information is within the acceptable range on the basis of the received acceptable range and core temperature information, and transmits information representing the determination result to food hygiene management device 10.

Further, in this example described above, the generated composite photograph data is transmitted to and stored in server device 60, but the present invention is not limited to this, and the composite photograph data may be stored in food hygiene management device 10, for example. In this case, when food hygiene management device 10 receives the operation information at step S22 in FIG. 8, food hygiene management device 10 stores the composite photograph data in storage 18.

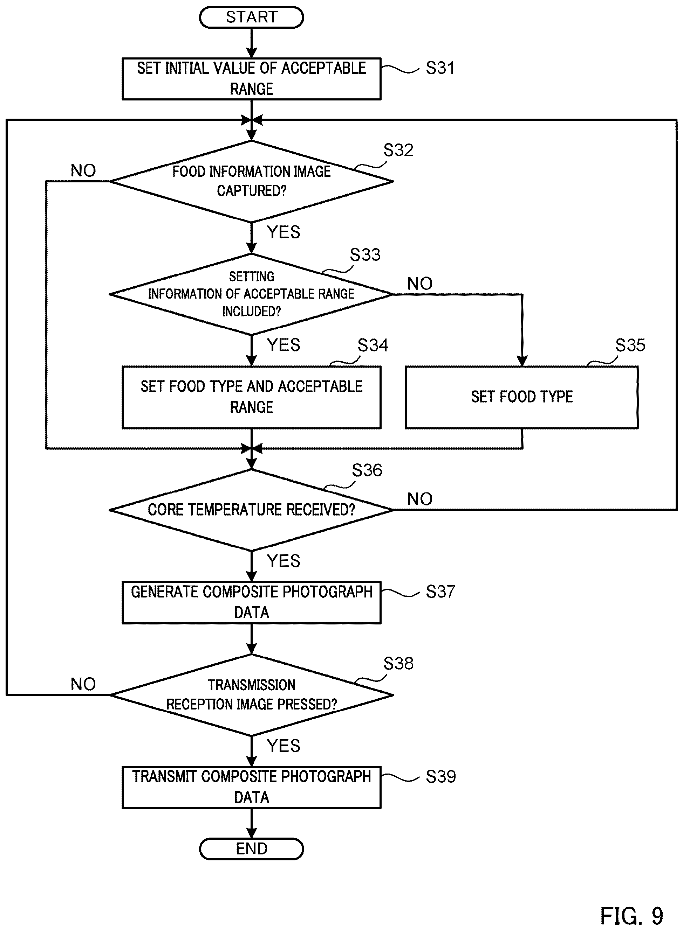

FIG. 9 is a flowchart illustrating an example of a flow of the food hygiene management process using food hygiene management system 100 according to Embodiment 1. FIG. 9 illustrates an operation performed by food hygiene management device 10 for the food hygiene management process.

At step S31, food hygiene management device 10 reads the acceptable range initial value from storage 18 and sets it. In this manner, food information display region 1402 of standby image display screen 1400 displays the initial value.

At step S32, determiner 110 of food hygiene management device 10 determines whether food information image 1403 has been shown in captured image display region 1401 of standby image display screen 1400. In this case, reader 17 of food hygiene management device 10 reads food information image 1403. Then, determiner 110 determines whether food information image 1403 has been shown in captured image display region 1401 based on whether the food information has been recognized by reader 17.

When it is determined that food information image 1403 is shown in captured image display region 1401 (step S32: YES), the process is advanced to step S33. On the other hand, when it is determined that food information image 1403 is not shown in captured image display region 1401 (step S32: NO), the process is advanced to step S36. Specifically, when food information image 1403 is not shown in captured image display region 1401, or when food information image 1403 cannot be read, food hygiene management device 10 proceeds the food hygiene management process without reading the food information.

At step S33, determiner 110 determines whether setting information about the acceptable range is included in the food information recognized by reader 17. Note that, this example assumes that the information representing type of food 200 is included in the food information read by reader 17.

When it is determined that setting information about the acceptable range is included in the food information (step S33: YES), food hygiene management device 10 sets the type and acceptable range of food 200 for the core temperature at step S34. On the other hand, when it is determined that setting information about the acceptable range is not included in the food information and that only information about the type of food 200 is included (step S33: NO), food hygiene management device 10 sets the type of food 200 at step S35.

Here, each of the type and acceptable range of food 200 is individually set, and only the newly recognized information is updated. For example, in the case where only the acceptable range of food 200 is included in the recognized food information, only the information representing the acceptable range is updated, and the set information is maintained for information representing the type of food 200.

At step S36, food hygiene management device 10 determines whether the core temperature of food 200 has been acquired at core temperature acquirer 11. When it is determined that the core temperature has been acquired (step S36: YES), screen generator 15 of food hygiene management device 10 generates composite photograph data at step S37, and generates composite photograph display screen 1410. On the other hand, when it is determined that the core temperature has not been acquired (step S36: NO), the process is returned to step S32.

At step S38, food hygiene management device 10 determines whether transmission reception image 1407 of composite photograph display screen 1410 has been pressed by the operator. When it is determined that transmission reception image 1407 has been pressed (step S38: YES), food hygiene management device 10 transmits composite photograph data to server device 60 through communicator 19 at step S39. On the other hand, when it is determined that transmission reception image 1407 has not been pressed (step S38: NO), the process is returned to step S32.

Note that, while in this example the food hygiene management process is advanced even when food information related to food 200 has not been acquired, and past information such as the acceptable range initial value is used, but the present invention is not limited to this, and the acquisition of the food information may be mandatory.

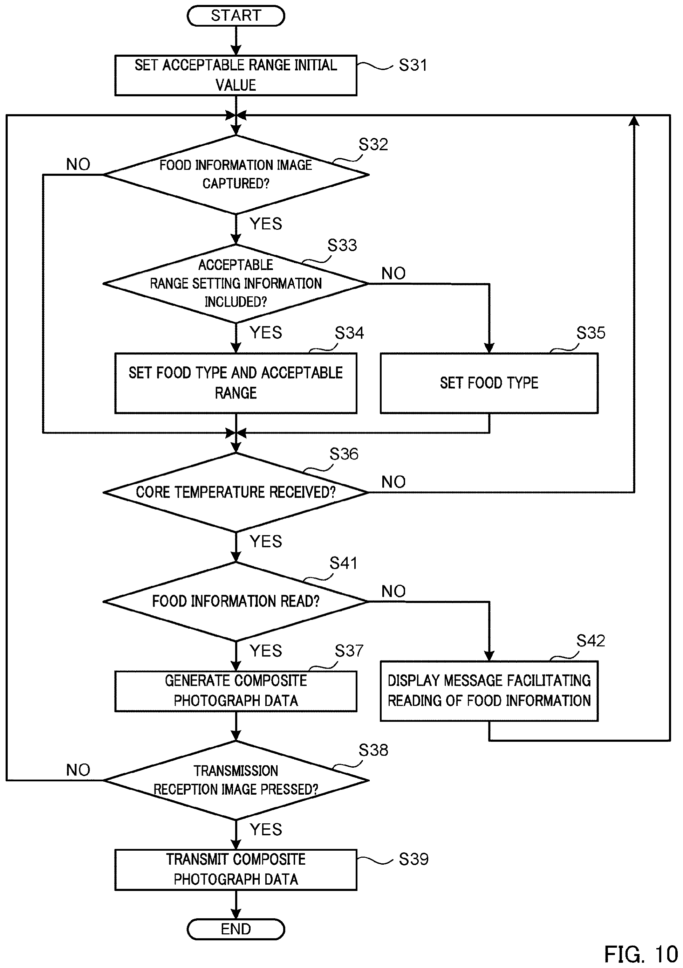

FIG. 10 is a flowchart illustrating another example of a flow of the food hygiene management process using food hygiene management system 100 according to Embodiment 1. FIG. 10 illustrates an operation performed by food hygiene management device 10 for the food hygiene management process. In addition, the example illustrated in FIG. 10 is a flow of a process of a case where reading of food information image 1403 is mandatory. In the following description with reference to FIG. 10, processes common to those of FIG. 9 are denoted with the same reference numerals, and the description thereof is omitted.

At step S36, when food hygiene management device 10 determines that the core temperature of food 200 has been acquired at core temperature acquirer 11 (step S36: YES), the process is advanced to step S41.

At step S41, food hygiene management device 10 determines whether reading of food information image 1403 shown in captured image display region 1401 has been performed by reader 17. When it is determined that food information image 1403 has been read (step S41: YES), screen generator 15 generates composite photograph data at step S37, and generates composite photograph display screen 1410.

On the other hand, when it is determined that food information image 1403 has not been read (step S41: NO), screen generator 15 generates a message for facilitating reading of food information image 1403 at step S42. Then, display information generator 16 generates display information for displaying the generated message on display device 40. Then, the process is returned to step S32.

### Variations

Next, a variation of the food hygiene management process according to Embodiment 1 is described. While in the examples illustrated in FIGS. 9 and 10 described above, one food information image 1403 including at least the type of food 200 is read, but the present invention is not limited to this, and a plurality of food information images 1403 may be read, for example.

Specifically, for example, different food information may be respectively individually included in a plurality of food information images 1403 such that there is a plurality of food information images 1403 including one including the type of food 200 and another including an acceptable range for the core temperature. In this case, food hygiene management device 10 simultaneously or sequentially reads the plurality of food information images 1403, and updates the food information in accordance with the read result.

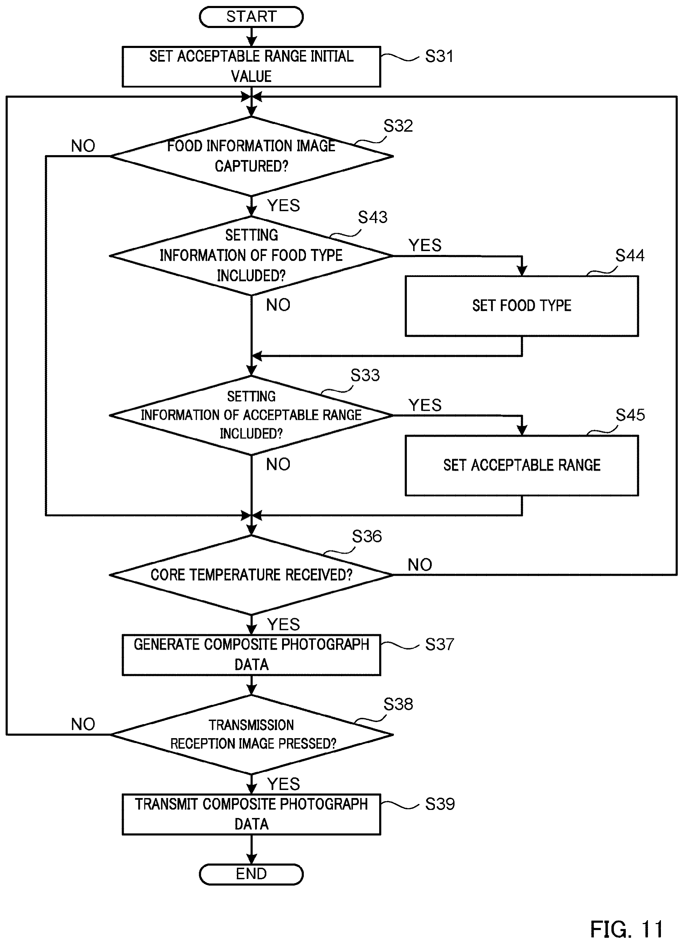

FIG. 11 is a flowchart illustrating a variation of a flow of the food hygiene management process using food hygiene management system 100 according to Embodiment 1. FIG. 11 illustrates an operation performed by food hygiene management device 10 for the food hygiene management process. In the following description with reference to FIG. 11, processes common to those of FIG. 9 are denoted with the same reference numerals, and the description thereof is omitted.

At step S32, when it is determined that food information image 1403 is shown in captured image display region 1401 (step S32: YES), the process is advanced to step S43. At step S43, determiner 110 of food hygiene management device 10 determines whether setting information about the type of food 200 is included in the food information recognized by reader 17.

When it is determined that setting information about the type of food 200 is included in the food information (step S43: YES), food hygiene management device 10 sets the type of food 200 at step S44. On the other hand, when it is determined that the setting information about the type of food 200 is not included in the food information (step S43: NO), the process is advanced to step S33.

At step S33, determiner 110 determines whether setting information about the acceptable range is included in the food information recognized by reader 17. When it is determined that setting information about the acceptable range is included in the food information (step S33: YES), food hygiene management device 10 sets the acceptable range for the core temperature of food 200 at step S45. On the other hand, when it is determined that the setting information about the acceptable range is not included in the food information (step S33: NO), the process is advanced to step S36.

Thereafter, as in the example illustrated in FIG. 9, food hygiene management device 10 generates composite photograph data and composite photograph display screen 1410 on the basis of the received core temperature of food 200. Then, when transmission reception image 1407 of composite photograph display screen 1410 is pressed by the operator, food hygiene management device 10 transmits the generated composite photograph data to server device 60.

Note that, after the type and acceptable range of food 200 have been read, food hygiene management device 10 may again read food information image 1403 including the food information on one of them, and update the food information. In the example illustrated in FIG. 11, until the core temperature of food 200 is measured at step S36, the processes of step S32 to step S45 are repeated. In this manner, food information image 1403 is repeatedly read, and thus the food information can be modified.

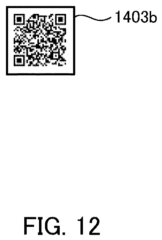

FIG. 12 is a schematic view illustrating an example of code image 1403b. This code image 1403b is an example of food information image 1403 for setting the acceptable range for the core temperature of food 200, and is a two-dimensional code in which information representing that the minimum temperature of the acceptable range is "58°C" is described in the JSON format.

In the food hygiene management process illustrated in FIG. 11, when food information image 1403 of code image 1403b illustrated in FIG. 12 or the like is read in a period until the core temperature of food 200 is acquired at step S36, the food information such as the acceptable range is changed. At this time, it is not necessary for the operator to touch input device 50 and the like of food hygiene management system 100. Thus, setting of the acceptable range for the core temperature of food 200 can be changed in a more hygienic manner.

The above-described operation example of food hygiene management system 100 is merely an example, and different operations may be performed depending on the operation methods specified by a company operating food hygiene management system 100, for example. For example, in the sequence diagrams of FIGS. 7 and 8 and the flowcharts of FIGS. 9 and 10, when the operator operates transmission reception image 1417, food hygiene management device 10 transmits composite photograph data. As another exemplary operation, in response to an operation other than the operation of transmission reception image 1417, food hygiene management device 10 may transmit composite image data.

Specific examples are described below. For example, food hygiene management device 10 may further include a microphone and/or a voice recognizer, and when a voice of the operator "transmission", "execute" and/or the like is recognized by the microphone and/or voice recognizer, food hygiene management device 10 may transmit composite image data. Alternatively, food hygiene management device 10 may further include a foot switch such as a pedal, and when the operator performs an operation of pressing the foot switch, composite image data may be transmitted. With such a configuration, it is not necessary for the operator to touch and operate input device 50 or the like of food hygiene management system 100, thereby ensuring higher hygiene.

Alternatively, depending on the application method of food hygiene management system 100, composite image data may be transmitted in all cases regardless of whether the core temperature of food 200 is within the acceptable range. In this case, for example, when a predetermined time has elapsed after the composite image data is displayed on display device 40, food hygiene management device 10 automatically transmits that food image data. It suffices to display on the screen displayed on display device 40, a message "composite image data will be transmitted in 10 seconds" or the like.

In addition, when composite image data on food whose core temperature is not within the acceptable range is transmitted, it suffices to transmit the composite image data with a flag representing that the core temperature is not within the acceptable range. In this case, hygiene management can be performed through the core temperature measurement of food 200, and information related to the time period when the core temperature does not satisfy the standard can be stored.

Further, when the core temperature of food 200 is not within the acceptable range, composite image data may not be transmitted. In this case, for example, food hygiene management device 10 displays an alert message representing that the measured core temperature of food 200 is outside the acceptable range on display device 40 for a predetermined time, and does not transmit composite image data. Then, food hygiene management device 10 may reset the system to the capturing standby state, and display standby image display screen 1400 on display device 40.

As described above, food hygiene management device 10 according to Embodiment 1 generates composite photograph display screen 1410 that displays composite photograph data including the core temperature information acquired by core temperature acquirer 11, the date/time information on the measurement date/time of the core temperature, the acceptable range included in the food information image recognized by reader 17, and the photograph data on food 200 acquired by photograph acquirer 12.

In this manner, food hygiene management device 10 recognizes the acceptable range for the core temperature of food 200 when a food information image is read, and thus it is not necessary for the operator to set the acceptable range for the core temperature. Thus, it is possible to reduce the labor and time required for food hygiene management, while hygiene management can be performed in a more hygienic manner.

### Embodiment 2

Hereinafter, Embodiment 2 of the present disclosure is described. The acceptable range for the core temperature of food 200 is set on the basis of the food information image read during standby for imaging; however, even for the same type of food 200, the acceptable range for the core temperature may vary depending on the delivery destination to which food 200 is delivered. In view of this, Embodiment 2 enables changing the setting value of the acceptable range for the core temperature included in the read food information image.

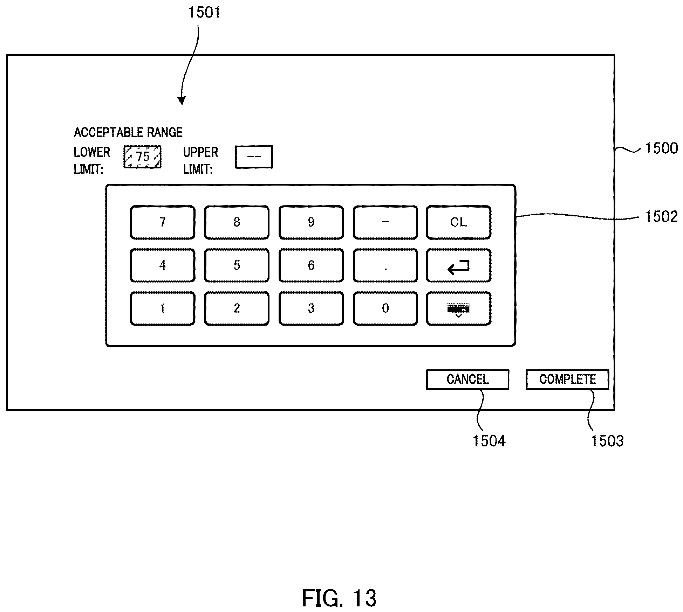

FIG. 13 is a schematic view illustrating an example of food information change screen 1500 displayed on display device 40 according to Embodiment 2. As illustrated in FIG. 13, food information change screen 1500 includes acceptable range selection image 1501, numerical value selection image 1502, change complete image 1503, and change cancel image 1504.

Acceptable range selection image 1501 is an image that indicates an upper limit value and a lower limit value of the acceptable range for the core temperature of food 200 that are set on the basis of the food information. Acceptable range selection image 1501 is an image for selecting the set upper limit value or set lower limit value of the acceptable range through input device 50 when the operator determines that the setting value of the acceptable range should be changed. In acceptable range selection image 1501, the background of the selected value changes, for example. In this example, the background of the lower limit value of the acceptable range is hatched, thereby indicating a state where the lower limit value is selected.

For example, numerical value selection image 1502 is an image of numeric keys composed of a plurality of key images including the numerical values of 0 to 9 for changing the set upper limit value or set lower limit value displayed on acceptable range selection image 1501. In numerical value selection image 1502, the setting value of the acceptable range is input through input device 50 when the operator determines that the setting value of the acceptable range should be changed.

Change complete image 1503 is an image for terminating the change of the setting value of the acceptable range. Change complete image 1503 is selected through input device 50 when the operator determines that changing of the setting value of the acceptable range has been completed.

Change cancel image 1504 is an image for cancelling changing of the setting value of the acceptable range changed using numerical value selection image 1502. Change cancel image 1504 is selected through input device 50 when the operator determines that a change of the setting value of the acceptable range should be cancelled.

Such a food information change screen 1500 is displayed through transfer from standby image display screen 1400 (see FIG. 8) displayed on display device 40 during standby for imaging. For example, when an acceptable range change image not illustrated in the drawing is displayed on standby image display screen 1400, and the acceptable range change image is selected by the operator, food information change screen 1500 is displayed.

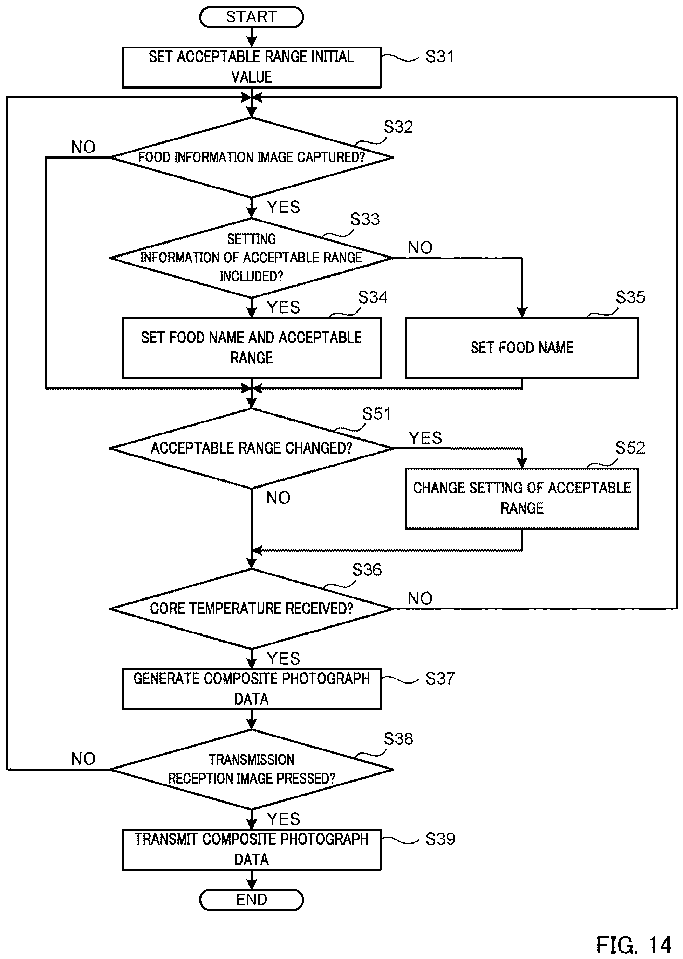

FIG. 14 is a flowchart illustrating an example of a flow of the food hygiene management process using food hygiene management system 100 according to Embodiment 2. FIG. 14 illustrates an operation performed by food hygiene management device 10 for the food hygiene management process. In the following description with reference to FIG. 14, processes common to those of FIG. 9 are denoted with the same reference numerals, and the description thereof is omitted.

When food information about food 200 is set (step S32: NO, step S34 or step S35) in the food hygiene management process according to Embodiment 2, food hygiene management device 10 determines whether food information change screen 1500 has been displayed on display device 40 and the acceptable range of food 200 has been changed at step S51.

When it is determined that the acceptable range has been changed (step S51: YES), food hygiene management device 10 changes the setting of the acceptable range for the core temperature of food 200 to a value changed on food information change screen 1500 at step S52. Then, the process is advanced to step S36. On the other hand, when it is determined that acceptable range has not been changed (step S51: NO), the process is advanced to step S36 in the state where the setting of the current acceptable range is maintained.

As described above, Embodiment 2 allows the operator to change the acceptable range displayed on food information change screen 1500. Therefore, even if the acceptable range for the core temperature of food 200 varies depending on the delivery destination or the like, it is possible to easily cope with such variations.

Note that, in the above-described example, acceptable range for the core temperature setting can be changed by operating the numerical value of selection image 1502 of food information change screen 1500, but the present invention is not limited to this, and the setting of the acceptable range can be changed through other operations. For example, a microphone and a voice recognizer may be provided in food hygiene management device 10, and the setting of the acceptable range for the core temperature may be changed on the basis of the voice from the operator. With such a configuration, it is not necessary for the operator to touch and operate input device 50 or the like of food hygiene management system 100, thereby ensuring higher hygiene.

In addition, in the above-described example, the setting of the acceptable range for the core temperature is changed by operating food information change screen 1500, but the present invention is not limited to this, and the setting about the type of food 200 may be changed.

Hereinabove, Embodiments 1 and 2 have been described, but the present disclosure is limited to the above-described Embodiments 1 and 2, and various modifications and applications may be made without departing from the gist of the present disclosure. For example, the acceptable range initial value in the food hygiene management process is not limited to the configuration in which the value is preliminarily stored in storage 18 of food hygiene management device 10. For example, the acceptable range initial value may be stored in server device 60 in advance, and food hygiene management device 10 may receive the acceptable range initial value from server device 60 when setting the acceptable range initial value.

In addition, in the above description, code image 1403b of food information image 1403 includes information about the type and acceptable range of food 200 for the core temperature, but the present invention is not limited to this, and respective information may be included in different code images 1403b. Specifically, as food information image 1403, code image 1403b including information about the type of food 200, and code image 1403b including information about core temperature acceptable range may be prepared, and reader 17 may read respective code images 1403b, for example.

Further, the function of recognizing the food information by reading food information image 1403 during standby for imaging may be selectable.

This application is entitled to and claims the benefit of Japanese Patent Application No. 2023-015505 filed on February 3, 2023, the disclosure each of which including the specification, drawings and abstract is incorporated herein by reference in its entirety.

### Industrial Applicability

The food hygiene management system of the present disclosure is useful for hygiene management in food manufacturing processes.

### Reference Signs List

10 Food hygiene management device
11 Core temperature acquirer
12 Photograph acquirer
13 Operation information acquirer
14 Imaging instructor
15 Screen generator
16 Display information generator
17 Reader
18 Storage
19 Communicator
20 Core temperature information generation device
30 Photograph capturing device
40 Display device
50 Input device
60 Server device
100 Food hygiene management system
110 Determiner
200 Food
300 Platform
400 Network
1000 Computer
1400 Standby image display screen
1403 Food information image
1403a Letter image
1403b Code image
1410 Composite photograph display screen
1500 Food information change screen
1501 Acceptable range selection image
1502 Numerical value selection image
1503 Change complete image
1504 Change cancel image

## Claims

1. A food hygiene management device comprising:
a core temperature acquirer that acquires core temperature information representing a core temperature of a food;
a photograph acquirer that acquires photograph data on the food;
a reader that reads a food information image including an acceptable range for the core temperature of the food to recognize the acceptable range; and
a screen generator that generates a composite photograph display screen on which composite photograph data including the core temperature information, date/time information on a measurement date/time of the core temperature, the acceptable range and the photograph data of the food is displayed.

2. The food hygiene management device according to claim 1,
wherein the reader reads the food information image during standby for imaging, and
wherein the screen generator generates a standby image display screen on which the acceptable range and a standby image acquired during standby for imaging are displayed.

3. The food hygiene management device according to claim 1, wherein the food information image includes at least one of a letter image representing information related to the food in a form of letters, and a code image representing a code describing the information related to the food in a predetermined format.

4. The food hygiene management device according to claim 1, wherein the food information image includes a type of the food.

5. The food hygiene management device according to claim 1, wherein the screen generator generates a food information change screen for changing the acceptable range.

6. A food hygiene management system comprising:
a core temperature information generation device that generates core temperature information representing a core temperature of a food;
a photograph capturing device that captures a photograph of the food; and
the food hygiene management device according to claim 1.

7. A food hygiene management method comprising:
acquiring core temperature information representing a core temperature of a food;
acquiring photograph data on the food;
reading a food information image including an acceptable range for the core temperature of the food to recognize the acceptable range; and
generating a composite photograph display screen on which composite photograph data including the core temperature information, date/time information on a measurement date/time of the core temperature, the acceptable range and the photograph data of the food is displayed.

8. A program that causes a computer to execute the food hygiene management method according to claim 7.
